# EUROPEAN PATENT SPECIFICATION

(11) **EP 3 682 156 B1**
(45) Date of publication and mention of the grant of the patent: **01.01.2025**
(21) Application number: 18769165.4
(22) Date of filing: 12.09.2018
(51) Int. Cl.: F17C 13/00, F17C 5/02

(54) **A SYSTEM FOR TRANSMISSION OF LIQUID HYDROGEN**
SYSTEM ZUR ÜBERTRAGUNG VON FLÜSSIGEM WASSERSTOFF
SYSTÈME DE TRANSMISSION D'HYDROGÈNE LIQUIDE

(30) Priority: 14.09.2017 DE 102017121364
(43) Date of publication of application: 22.07.2020
(73) Proprietor: Alleima GmbH, 33824 Werther (DE)
(72) Inventor: HEDVALL, Christofer, 33615 Bielefeld (DE); FROBÖSE, Thomas, 33775 Versmold (DE)
(74) Representative: Setréus, Ellen
(86) International application number: PCT/EP2018/074549
(87) International publication number: WO 2019/053035

(56) References cited:
- WO-A1-2015/200325
- US-A- 3 592 634
- US-A1- 2008 190 214
- SANDVIK AB: "Sandvik 21-6-9 AEROSPACE TUBE AND PIPE, SEAMLESS - DATASHEET", 1 September 2017 (2017-09-01), https://www.materials.sandvik/en/materials-center/material-datasheets/tube-and-pipe-seamless/sandvik-21-6-9-aerospace/, pages 1 - 2, XP055523906, Retrieved from the Internet <URL:https://www.materials.sandvik/en/materials-center/material-datasheets/tube-and-pipe-seamless/sandvik-21-6-9-aerospace/?show=pdf> [retrieved on 20181114]

## Description

### TECHNICAL FIELD

The present disclosure relates to a system for transmission of liquid hydrogen with a liquid hydrogen transmitting equipment, a liquid hydrogen receiving equipment, and a conduit in fluid communication with the liquid hydrogen transmitting equipment and with the liquid hydrogen receiving equipment for guiding liquid hydrogen between the liquid hydrogen transmitting equipment and the liquid hydrogen receiving equipment, wherein at least a section of the conduit is provided by a seamless tube made of an austenitic stainless steel.

The present disclosure furthermore relates to a method for manufacturing a system for transmission of liquid hydrogen.

### BACKGROUND

Applications using liquid hydrogen require cryogenic storage, because liquid hydrogen boils around -253° C. Therefore, there is a need for a material which can be used under these extreme conditions. Another issue is that hydrogen is easily flammable and in a gaseous state highly explosive. Yet another issue which occurs when using hydrogen is known as hydrogen embrittlement. This effect is relevant every time hydrogen is in contact with a metal surface because individual hydrogen atoms will diffuse through the metal.

Welded tubes bear the risk of cracking within the weld zone. In addition, if there would be a crack in the tube transmitting liquid hydrogen, because of the low boiling temperature, hydrogen would immediately change into a gaseous state. Hydrogen in a gaseous state can accumulate at a certain location and then there will be a risk of an explosion. Cracks in the material would also benefit from the hydrogen embrittlement as a crack is equivalent to a bigger surface wherein the hydrogen could be introduced to the metal surface.

US 2008/0190214 A1 discloses ab outback flow straightener comprising a plurality of flow straightener vanes positioned in a flow duct of a 21-6-9 stainless steel. The flow straightener vanes are cut back as a function of a radius of the flow duct, such that an axial length of the vanes decreases with the radius.

WO 2015/200325 A1 discloses flowforming processes for the production of corrosion resistant alloy tubes, the processes comprising: deforming a corrosion resistant alloy plate to form a hollow cylindrical preform having a longitudinal seam region located between two abutting ends of the deformed plate; welding the longitudinal seam region to join together the abutting ends; and flowforming the hollow cylindrical preform to produce a corrosion resistant alloy tube.

It is an aspect of the present disclosure to provide a system for transmission of liquid hydrogen that overcomes at least one of the above disadvantages. It is a further aspect of the present disclosure to provide a system for transmission of liquid hydrogen that provides lower risks and higher standards for transmission of liquid hydrogen. Another aspect of the present disclosure is to provide a system for transmission of liquid hydrogen having a tube with the same or lesser fatigue as a welded tube and which at the same time provides a reduced weight.

### SUMMARY

At least one of the above-mentioned aspects is solved by a system for transmission of liquid hydrogen according to claim 1. In the system, at least a section of the conduit is provided by a seamless tube made of an austenitic stainless steel comprising, in weight%, C ≤ 0.080, 8.00 ≤ Mn ≤ 10.00, Si ≤ 1.00, P ≤ 0.030, S ≤ 0.030, 19.00 ≤ Cr≤ 21.50, 5.50 ≤ Ni ≤ 7.50, 0.15 ≤ N ≤ 0.40, Mo ≤ 0.75, Cu ≤ 0.75, balance Fe and normally occurring impurities, wherein the tube is obtained by a method comprising the steps: providing a melt of an austenitic stainless steel comprising, in weight%, C ≤ 0.080, 8.00:5 Mn ≤ 10.00, Si ≤ 1.00, P ≤ 0.030, S ≤ 0.030, 19.00 ≤ Cr ≤ 21.50, 5.50 ≤ Ni ≤ 7.50, 0.15 ≤ N ≤ 0.40, Mo ≤ 0.75, Cu ≤ 0.75, balance Fe and normally occurring impurities, extruding a billet from the melt, hot forming the billet into a tubular hollow, cooling the hollow, and cold pilger milling or cold drawing the hollow into the tube.

In the present disclosure the term "transmission of liquid hydrogen" is used synonymous with the terms "transporting of liquid hydrogen" describing the process of a guided transfer of the liquid hydrogen via a conduit from point A to point B.

In an embodiment according to the present disclosure, the seamless tube is made of an austenitic stainless steel consisting of or comprising the same above-mentioned elements but with a maximum content in weight% of C ≤ 0.040.

It should be pointed out that for those above-mentioned elements, the austenitic stainless steel comprises or consists of, where no lower limit of the content is given, the minimum in weight% can be "0". Those elements are C, P, S, Mo and Cu.

The austenitic stainless alloy as defined hereinabove or hereinafter may optionally comprise one or more of the following elements selected from the group of Al, V, Nb, Ti, O, Zr, Hf, Ta, Mg, Pb, Co, Bi, Ca, La, Ce, Y and B. These elements may be added during the manufacturing process in orderto enhance e.g. deoxidation, corrosion resistance, hot ductility and/or machinability. However, as known in the art, the addition of these elements has to be limited depending on which element is present. Thus, if added the total content of these elements is less than or equal to 1.0 weight%.

The term "impurities" as referred to herein is intended to mean substances that will contaminate the austenitic stainless alloy when it is industrially produced, due to the raw materials such as ores and scraps, and due to various other factors in the production process, and are allowed to contaminate within the ranges not adversely affecting the austenitic stainless alloy as defined hereinabove or hereinafter.

In accordance with independent claim 1, at least a section of the conduit is provided by a seamless tube made of an austenitic stainless steel consisting of, in weight%, C ≤ 0.080, 8.00 ≤ Mn ≤ 10.00, Si ≤ 1.00, P ≤ 0.030, S ≤ 0.030, 19.00 ≤ Cr ≤ 21.50, 5.50 ≤ Ni ≤ 7.50, 0.15 ≤ N ≤ 0.40, Mo ≤ 0.75, Cu ≤ 0.75, balance Fe and normally occurring impurities.

In another embodiment of the present disclosure, the seamless tube is made of an austenitic stainless steel consisting of or comprising the same above-mentioned elements but with a maximum content in weight% of C ≤ 0.040.

The above-mentioned austenitic stainless steel is known as a 21-6-9 stainless steel (also denoted as UNS S21900).

The 21-6-9 stainless steel has a high level of Mn, a low level of Ni and the addition of N. It is characterized by high mechanical strength in the hard condition, very good impact toughness and even to very low temperatures and very good high temperature oxidation resistance.

Tubes, made of an austenitic 21-6-9 stainless steel so far have only been provided as welded tubes. A welded tube is manufactured for example by bending a flat steel sheet into a tube, and welding the joint together to form a seam. Several other manufacturing steps may follow.

A potential disadvantage of such welded tubes is the risk of cracking, wherein the weld zone is the preferred location for cracking. This circumstance was shown in fatigue experiments with welded tubes of 21-6-9 steel. Especially, this is a problem at places where tubes are subject to extreme conditions. With extreme conditions are meant for example high mechanical stresses, high or low temperatures, high temperature gradients as well as high pressures or high pressure gradients.

According to the present disclosure the tube providing the conduit is a seamless tube.

The advantages of a seamless tube are an increase in the lifetime of components, the possibility to design for lower weight at equal strength as well as a better quality of the inner shape of the seamless tube when compared to a welded tube.

Another advantage of a seamless tube over a welded tube is the possibility to stand higher hoop stresses. Therefore, within a pulse pressure testing, a stress-cycle (S-N) curve also known as Wöhler curve was carried out. The results showed that for welded and seamless tubes with the same outer diameter and same wall thickness, the seamless tubes will always withstand higher hoop stresses independent of the applied pressures. Consequently, it is possible to manufacture a seamless tube that has, when compared to a welded tube, a lower wall thickness but can withstand equal hoop stresses. For this reason, it is possible to save material as well as weight.

In an embodiment, the system for transmission of liquid hydrogen is a filling station, wherein the liquid hydrogen transmitting equipment is a reservoir for liquid hydrogen, and wherein the liquid hydrogen receiving equipment is a pump nozzle.

In an embodiment, the system for transmission of liquid hydrogen is a vehicle, an aircraft or a watercraft, wherein the liquid hydrogen transmitting equipment is a reservoir for liquid hydrogen, and wherein the liquid hydrogen receiving equipment is a hydrogen engine or a fuel cell.

It should be pointed out that the term "watercraft" in the sense of the present disclosure is to be understood broadly, such that it covers all types of water-borne vehicles like ships, boats, hovercraft and submarines. In addition, it should be mentioned that the term "aircraft" in the sense of the present disclosure is to be understood broadly, such that it covers all types of airborne equipment like planes, helicopters rockets, satellites and other space equipment.

Insofar as in the foregoing as well as the following detailed description of the embodiments and claims reference is made to either the austenitic stainless steel tube or the method for manufacturing the austenitic stainless steel tube, the features described are applicable for both the tube and the method for manufacturing the tube.

The tube is obtained by a method comprising the steps: providing a melt of an austenitic stainless steel comprising, in weight%, C ≤ 0.080, 8.00 ≤ Mn ≤ 10.00, Si ≤ 1.00, P ≤ 0.030, S ≤ 0.030, 19.00 ≤ Cr ≤ 21.50, 5.50 ≤ Ni ≤ 7.50, 0.15 ≤ N ≤ 0.40, Mo ≤ 0.75, Cu ≤ 0.75, balance Fe and normally occurring impurities, extruding a billet from the melt, hot forming of the billet into a tubular hollow, cooling the hollow, and cold forming the hollow into the tube.

In an embodiment the hot forming is effected by hot rolling.

In accordance with claim 1, a melt of an austenitic stainless steel is provided, wherein the austenitic stainless steel consists of, in weight%, C ≤ 0.080, 8.00 ≤ Mn ≤ 10.00, Si ≤ 1.00, P ≤ 0.030, S ≤ 0.030, 19.00 ≤ Cr ≤ 21.50, 5.50 ≤ Ni ≤ 7.50, 0.15 ≤ N ≤ 0.40, Mo ≤ 0.75, Cu ≤ 0.75, balance Fe and normally occurring impurities.

In another embodiment within the scope of claim 1, a melt of an austenitic stainless steel is provided, wherein the austenitic stainless steel consists of or comprises the same above-mentioned elements but with a maximum content in weight% of C ≤ 0.040.

According to the present disclosure, the cold forming is effected by cold pilger milling or cold drawing.

Cold forming processes are used for forming a hollow of metal into a tube. The cold forming of the final seamless tube not only changes its properties due to strain hardening going along with the cold forming, but the tube's wall thickness is reduced as is its inner and outer diameter. By cold forming a hollow into a tube, for example by cold pilger milling or cold drawing, a tube with exact dimensions can be manufactured.

Pilger milling is a widely-used method to reduce the dimensions of a tube. Pilger milling, as it is considered here, is performed at room temperature and thus is known as cold pilger milling. During pilger milling (in the present method), the hollow is pushed over a calibrated mandrel defining the inner diameter of the finished tube. The hollow is engaged by two calibrated rollers defining the outer diameter of the tube. The rollers roll the hollow in a longitudinal direction over the mandrel.

At the beginning of the pilger milling process, the hollow is moved by a driver into the chuck of the feeder. At a front point of return of the roll stand in the feed direction of the hollow, the rollers have an angular position in which the hollow can be inserted into the infeed pockets of the rollers and can be located between the rollers. The two rollers being vertically mounted above each other at the roll stand, roll over the hollow by rolling back and forth in a direction parallel to the feed direction of the hollow. During the motion of the roll stand between the front point of return and the rear point of return, the rollers stretch out the hollow over the mandrel mounted inside the hollow.

The rollers and the mandrel are calibrated such that the gap formed between the rollers and the mandrel in the section of the rollers denoted as the working caliber is continuously reduced from the wall thickness of the hollow prior to the forming to the wall thickness of the completely rolled tube. Furthermore, the outer diameter defined by the rollers is reduced from the outer diameter of the hollow to the outer diameter of the finished tube. In addition, the inner diameter defined by the mandrel is reduced from the inner diameter of the hollow to the inner diameter of the finished tube. Further to the working caliber, the rollers comprise a planing caliber. The planing caliber neither reduces the wall thickness of the tube nor the inner or the outer diameter of the tube, but is used for planing the surfaces of the tube to be manufactured. When the rollers have reached the rear point of return of the roll stand, the rollers are at an angular position, wherein the rollers form an escape pocket to bring the rollers out of engagement with the tube.

A feeding of the hollow in the feed direction occurs either at the front point of return of the roll stand or at the front point of return as well as at the rear point of return of the roll stand. In an embodiment, each section of the hollow can be rolled multiple times. In this embodiment, the steps of feeding the hollow in the feed direction are significantly smaller than the path of the roll stand from the front point of return to the rear point of return. By rolling each section of the tube multiple times, a uniform wall thickness and roundness of tube, a high surface quality of the tube as well as uniform inner and outer diameters can be achieved.

In order to obtain a uniform shape of the finalized tube, the hollow in addition to a stepwise feeding experiences an intermittent rotation about its axis of symmetry. Rotation of the hollow in an embodiment is provided at least one point of return of the roll stand, i.e. once the hollow is out of engagement with the rollers at the infeed pockets and release pockets, respectively.

In an embodiment of the present disclosure, the cold forming is effected by cold pilger milling and the tube after cold pilger milling is cold drawn through a drawing die.

In an embodiment of the present disclosure, the tube is cold drawn instead of cold pilger milling or the tube is cold drawn after cold pilger milling.

Drawing, as it is considered here, is performed at room temperature and thus is known as cold drawing.

Different methods of cold drawing can be applied as embodiments of the present disclosure, i.e. tube drawing, core drawing and rod drawing. During the process of tube drawing, only the outer diameter of the tube is reduced by drawing the tube through a drawing die without further defining the inner diameter of the tube. During core drawing and rod drawing, simultaneously the inner diameter and the wall thickness of the drawn tube are defined by a mandrel. Either the mandrel is not fixed but held by the tube itself or in rod drawing the mandrel is held by a rod extending through the inner diameter of the tube. In an embodiment, wherein a mandrel is applied during the drawing process, the drawing die and the mandrel define a ring-shaped gap through which the tube is drawn. When using a mandrel, the outer diameter, the inner diameter as well as the wall thickness may be reduced during the drawing process and the final tube has diameters within tight tolerances. A drawing equipment can either be continuously or discontinuously operated. During the drawing process, the work piece is clamped by a drive on the side of the drawing die, where the finalized tube can be gripped. In order to continuously draw the tube, the drawing equipment in an embodiment needs at least two drawing drives alternately clamping the tube in order to continuously draw the tube through the drawing die.

In an embodiment of the disclosure, the tube after cold forming is treated by ring autofrettage or ball autofrettage.

The treatment by ring autofrettage or ball autofrettage after cold forming, such as cold pilger milling or cold drawing, a hollow into a tube leads to an enhanced yield strength and reduced crack growth.

In an embodiment of the present disclosure, the tube after cold forming, in particular after cold pilger milling or after cold pilger milling and cold drawing, is annealed at a temperature in the range from 400° C to 460° C, wherein during annealing the tube is kept in a controlled atmosphere.

A tube manufactured by this method will obtain high tensile strength and high elongation in highpressure applications simultaneously.

In another embodiment of the present disclosure, the tube has an outer diameter of 40 mm or less and a wall thickness of 1.32 mm or less.

In yet another embodiment of the present disclosure, the tube has an outer diameter of 38.1 mm and a wall thickness of 0.8 mm.

In an embodiment of the present disclosure, the tube has an outer diameter of 38.1 mm and a wall thickness of 0.6 mm.

In yet another embodiment of the present disclosure, the tube has a wall thickness of either 0.8 mm or 0.6 mm.

In aerospace applications as well as in many water-borne vehicles there is less space available for tubes and it is essential to save weight. Thus, for aerospace applications and water-borne vehicles it is necessary to manufacture tubes with thin walls.

In an embodiment of the disclosure, the system is used for guiding liquid hydrogen pressurized at 100 bar or more in the conduit.

In a further embodiment of the disclosure, the system is used for guiding liquid hydrogen pressurized at 1000 bar or more in the conduit.

Especially for applications with restricted space a compressed liquid hydrogen lead to considerably higher storage densities. Therefore, an advantage of the mentioned invention is its increased pressure resistance.

### BRIEF DECSRIPTION OF THE FIGURES

Further advantages, features and applications of the present disclosure will become apparent from the following description of embodiments and the corresponding figures attached. The foregoing as well as the following detailed description of the embodiments will be better understood when read in conjunction with the appended drawings. It should be understood that the embodiments depicted are not limited to the precise arrangements and instrumentalities shown.
Figure 1 is a schematic front view of a filling station according to an embodiment of the present disclosure.
Figure 2 is a schematic side view of a watercraft according to an embodiment of the present disclosure.
Figure 3 is a flow chart of a method according to an embodiment of the present invention.

### DETAILED DESCRIPTION

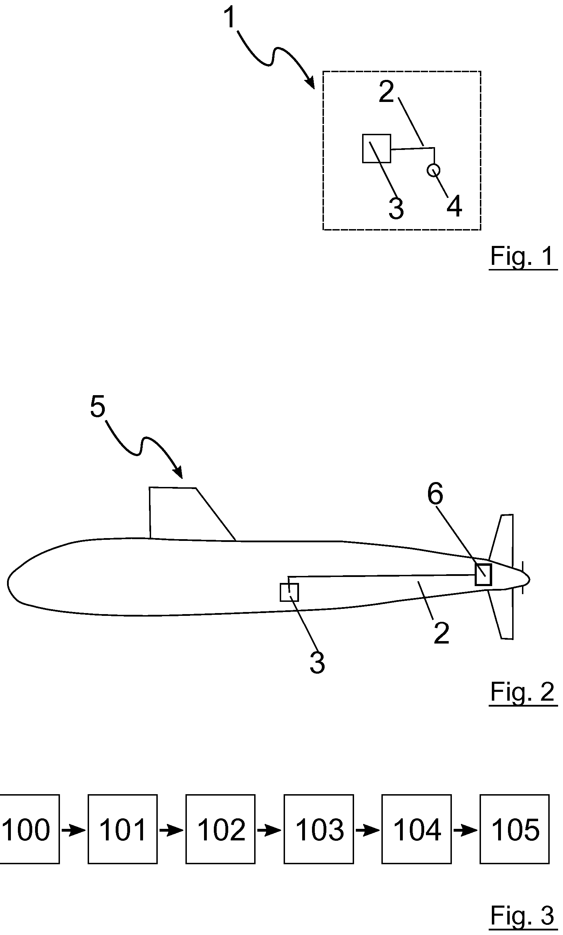

Figure 1 is a schematic front view of a filling station 1 according to an embodiment of the present disclosure, wherein the section of the conduit is provided by a seamless tube 2 made of a 21-6-9 stainless steel. The reservoir for liquid hydrogen 3 is used to extract the liquid hydrogen by using a pump nozzle 4 being in fluid communication with the reservoir for liquid hydrogen 3 across the tube 2.

Figure 2 is a schematic side view of a watercraft 5, more precisely a submarine according to an embodiment of the present disclosure, wherein the conduit is provided by a seamless tube 2 according to an embodiment of the present disclosure. The reservoir for liquid hydrogen 3 is arranged in the body of the submarine 5 being in fluid communication with a fuel cell 6 across the tube 2. The fuel cell 6 is then used to provide a propulsion system (unembodied) with fuel.

Figure 3 is a flow chart describing a method for forming a hollow into a tube 2 as it is used in the applications shown in figures 1 and 2. In a first step 100, a melt of an austenitic stainless steel is provided, wherein the austenitic stainless steel consists of, in weight%, C ≤ 0.080, 8.00 ≤ Mn ≤ 10.00, Si ≤ 1.00, P ≤ 0.030, S ≤ 0.030, 19.00 ≤ Cr ≤ 21.50, 5.50 ≤ Ni ≤ 7.50, 0.15 ≤ N ≤ 0.40, Mo ≤ 0.75, Cu ≤ 0.75, balance Fe and normally occurring impurities.

After extruding a billet from the melt in a second step 101, the billet is hot rolled into a tubular hollow in step 102. Then the hollow is cooled to room temperature in step 103. In a penultimate step 104, the hollow is cold pilger milled into a tube as it was described in the description. In a last step 105, the tube is cold drawn.

For purposes of the original disclosure, it is noted that all features become apparent for a person skilled in the art from the present description, the figures and the claims even if they have only been described with reference to particular further features and can be combined either on their own or in arbitrary combinations with other features or groups of features disclosed herein as far as such combinations are not explicitly excluded or technical facts exclude such combinations or make them useless. In any case, these combinations should not depart from the scope of claim 1. An extensive, explicit description of each possible combination of features has only been omitted in order to provide a short and readable description.

While the disclosure has been shown in detail in the figures and the above description, this description is only an example and is not considered to restrict the scope of protection as it is defined by the claims. The disclosure is not restricted to the disclosed embodiments.

### REFERENCE NUMERALS

- 1: Filling station
- 2: tube
- 3: reservoir for liquid hydrogen
- 4: pump nozzle
- 5: watercraft
- 6: fuel cell
- 100: providing a melt of an austenitic stainless steel
- 101: extruding a billet from the melt
- 102: hot rolling of the billet into a tubular hollow
- 103: cooling step
- 104: cold pilger milling step
- 105: cold drawing step

## Claims

1. A system for transmission of liquid hydrogen with
a liquid hydrogen transmitting equipment (3),
a liquid hydrogen receiving equipment (4, 6), and
a conduit in fluid communication with the liquid hydrogen transmitting equipment (3) and with the liquid hydrogen receiving equipment (4, 6) for guiding liquid hydrogen between the liquid hydrogen transmitting equipment (3) and the liquid hydrogen receiving equipment (4, 6),
wherein at least a section of the conduit is provided by a seamless tube (2) made of an austenitic stainless steel,
**characterized in that**
austenitic stainless steel comprises, in weight%,
C ≤ 0.080,
8.00 ≤ Mn ≤ 10.00,
Si ≤ 1.00,
P ≤ 0.030,
S ≤ 0.030,
19.00 ≤ Cr ≤ 21.50,
5.50 ≤ Ni ≤ 7.50,
0.15 ≤ N ≤ 0.40,
Mo ≤ 0.75,
Cu ≤ 0.75,
balance Fe and normally occurring impurities,
wherein the tube (2) is obtained by a method comprising the steps
providing a melt (100) of an austenitic stainless steel comprising, in weight%,
C ≤ 0.080,
8.00 ≤ Mn ≤ 10.00,
Si ≤ 1.00,
P ≤ 0.030,
S ≤ 0.030,
19.00 ≤ Cr ≤ 21.50,
5.50 ≤ Ni ≤ 7.50,
0.15 ≤ N ≤ 0.40,
Mo ≤ 0.75,
Cu ≤ 0.75,
balance Fe and normally occurring impurities,
extruding a billet from the melt (101),
hot forming the billet into a tubular hollow (102),
cooling the hollow (103), and
cold pilger milling (104) or cold drawing (105) the hollow into the tube (2).

2. The system according to claim 1, wherein the system is a filling station (1), wherein the liquid hydrogen transmitting equipment is a reservoir for liquid hydrogen (3), and wherein the liquid hydrogen receiving equipment is a pump nozzle (4).

3. The system according to claim 1, wherein the system is a vehicle, an aircraft or a watercraft (5), wherein the liquid hydrogen transmitting equipment is a reservoir for liquid hydrogen (3), and wherein the liquid hydrogen receiving equipment is a hydrogen engine or a fuel cell (6).

4. The system according to claim 1, wherein the tube (2) is cold formed by cold pilger milling (104) the tube (2) after cold pilger milling (104) is cold drawn (105) through a drawing die.

5. The system according to claim 1 or 4, wherein the tube (2) after cold forming (104, 105) is treated by ring autofrettage or ball autofrettage.

6. The system according to any one of claims 5 to 7, wherein the tube (2) after cold forming (104, 105) is annealed at a temperature in a range from 400° C to 460° C, wherein during annealing the tube is kept in a controlled atmosphere.

7. The system according to any one of the previous claims, wherein the tube (2) has an outer diameter of 40 mm or less and a wall thickness of 1.32 mm or less.

8. Use of the system according to any one of the previous claims for guiding liquid hydrogen pressurized at 100 bar or more in the conduit.

## Patentansprüche

1. System zum Übertragen von Flüssigwasserstoff mit
einer Flüssigwasserstoff-Übertragungseinrichtung (3),
einer Flüssigwasserstoff-Aufnahmeeinrichtung (4, 6) und
einer Leitung in strömungstechnischer Kommunikation mit der Flüssigwasserstoff-Übertragungseinrichtung (3) und mit der Flüssigwasserstoff-Aufnahmeeinrichtung (4, 6) zum Leiten von Flüssigwasserstoff zwischen der Flüssigwasserstoff-Übertragungseinrichtung (3) und der Flüssigwasserstoff-Aufnahmeeinrichtung (4, 6),
wobei zumindest ein Abschnitt der Leitung durch ein nahtloses Rohr (2) aus austenitischem Edelstahl bereitgestellt ist,
**dadurch gekennzeichnet, dass**
austenitischer Edelstahl in Gew.-% Folgendes umfasst
C ≤ 0,080,
8,00 ≤ Mn ≤ 10,00,
Si ≤ 1,00,
P ≤ 0,030,
S ≤ 0,030,
19,00 ≤ Cr ≤ 21,50,
5,50 ≤ Ni ≤ 7,50,
0,15 ≤ N ≤ 0,40,
Mo ≤ 0,75,
Cu ≤ 0,75,
Rest aus Fe und normal vorkommenden Verunreinigungen,
wobei das Rohr (2) durch ein Verfahren erhalten wird, das die Schritte umfasst zum Bereitstellen einer Schmelze (100) aus einem austenitischen Edelstahl, der in Gew.-% Folgendes umfasst
C ≤ 0,080,
8,00 ≤ Mn ≤ 10,00,
Si ≤ 1,00,
P ≤ 0,030,
S ≤ 0,030,
19,00 ≤ Cr ≤ 21,50,
5,50 ≤ Ni ≤ 7,50,
0,15 ≤ N ≤ 0,40,
Mo ≤ 0,75,
Cu ≤ 0,75,
Rest aus Fe und normal vorkommenden Verunreinigungen, Extrudieren eines Strangs aus der Schmelze (101),
Warmumformen des Blocks zu einem rohrförmigen Hohlkörper (102), Abkühlen des Hohlkörpers (103), und
Kaltpilgern (104) oder Kaltziehen (105) des Hohlkörpers zum Rohr (2).

2. System nach Anspruch 1, wobei das System eine Tankstelle (1) ist, wobei die Flüssigwasserstoff-Übertragungseinrichtung ein Vorratsbehälter für Flüssigwasserstoff (3) ist und wobei die Flüssigwasserstoff-Aufnahmeeinrichtung eine Zapfpistole (4) ist.

3. System nach Anspruch 1, wobei das System ein Fahrzeug, ein Flugzeug oder ein Wasserfahrzeug (5) ist, wobei die Flüssigwasserstoff-Übertragungseinrichtung ein Vorratsbehälter für Flüssigwasserstoff (3) ist und wobei die Flüssigwasserstoff-Aufnahmeeinrichtung ein Wasserstoffmotor oder eine Brennstoffzelle (6) ist.

4. System nach Anspruch 1, wobei das Rohr (2) durch Kaltpilgern (104) kaltgeformt wird und das Rohr (2) nach dem Kaltpilgern (104) durch eine Ziehmatrize kaltgezogen (105) wird.

5. System nach Anspruch 1 oder 4, wobei das Rohr (2) nach Kaltumformen (104, 105) mittels Ring-Autofrettage oder Kugel-Autofrettage behandelt wird.

6. System nach einem der Ansprüche 5 bis 7, wobei das Rohr (2) nach Kaltumformen (104, 105) bei einer Temperatur in einem Bereich von 400 °C bis 460 °C geglüht wird, wobei das Rohr während des Glühens in einer kontrollierten Atmosphäre gehalten wird.

7. System nach einem der vorstehenden Ansprüche, wobei das Rohr (2) einen Außendurchmesser von 40 mm oder weniger und eine Wanddicke von 1,32 mm oder weniger aufweist.

8. Verwendung des Systems nach einem der vorstehenden Ansprüche zum Leiten von Flüssigwasserstoff unter einem Druck von 100 bar oder mehr in der Leitung.

## Revendications

1. Système de transmission d'hydrogène liquide avec
un équipement de transmission d'hydrogène liquide (3),
un équipement de réception d'hydrogène liquide (4, 6), et
un conduit en communication fluidique avec l'équipement de transmission d'hydrogène liquide (3) et avec l'équipement de réception d'hydrogène liquide (4, 6) pour guider l'hydrogène liquide entre l'équipement de transmission d'hydrogène liquide (3) et l'équipement de réception d'hydrogène liquide (4, 6),
dans lequel au moins une section du conduit est constituée par un tube sans soudure (2) en acier inoxydable austénitique,
**caractérisé en ce que**
l'acier inoxydable austénitique comprend, en % en poids,
C ≤ 0,080,
8,00 ≤ Mn ≤ 10,00,
Si ≤ 1,00,
P ≤ 0,030,
S ≤ 0,030,
19,00 ≤ Cr ≤ 21,50,
5,50 ≤ Ni ≤ 7,50,
0,15 ≤ N ≤ 0,40,
Mo ≤ 0,75,
Cu ≤ 0,75,
le reste étant du Fe et des impuretés normalement présentes,
dans lequel le tube (2) est obtenu par un procédé comprenant les étapes de fourniture d'une masse fondue (100) d'un acier inoxydable austénitique comprenant, en % en poids,
C ≤ 0,080,
8,00 ≤ Mn ≤ 10,00,
Si ≤ 1,00,
P ≤ 0,030,
S ≤ 0,030,
19,00 ≤ Cr ≤ 21,50,
5,50 ≤ Ni ≤ 7,50,
0,15 ≤ N ≤ 0,40,
Mo ≤ 0,75,
Cu ≤ 0,75,
le reste étant du Fe et des impuretés normalement présentes, extrusion d'une billette à partir de la masse fondue (101),
façonnage à chaud de la billette en un élément creux tubulaire (102), refroidissement de l'élément creux (103), et
laminage Pilger à froid (104) ou étirage à froid (105) de l'élément creux en tube (2).

2. Système selon la revendication 1, dans lequel le système est un poste de remplissage (1), dans lequel l'équipement de transmission d'hydrogène liquide est un réservoir d'hydrogène liquide (3), et dans lequel l'équipement de réception d'hydrogène liquide est une buse de pompe (4).

3. Système selon la revendication 1, dans lequel le système est un véhicule, un aéronef ou un engin nautique (5), dans lequel l'équipement de transmission d'hydrogène liquide est un réservoir d'hydrogène liquide (3), et dans lequel l'équipement de réception d'hydrogène liquide est un moteur à hydrogène ou une pile à combustible (6).

4. Système selon la revendication 1, dans lequel le tube (2) est façonné à froid par laminage Pilger à froid (104), le tube (2) après laminage Pilger à froid (104) est étiré à froid (105) à travers une filière d'étirage.

5. Système selon la revendication 1 ou 4, dans lequel le tube (2) après façonnage à froid (104, 105) est traité par autofrettage à anneau ou autofrettage à billes.

6. Système selon l'une quelconque des revendications 5 à 7, dans lequel le tube (2) après façonnage à froid (104, 105) est recuit à une température dans une plage de 400 °C à 460 °C, dans lequel, pendant le recuit, le tube est maintenu dans une atmosphère régulée.

7. Système selon l'une quelconque des revendications précédentes, dans lequel le tube (2) présente un diamètre extérieur inférieur ou égal à 40 mm et une épaisseur de paroi inférieure ou égale à 1,32 mm.

8. Utilisation du système selon l'une quelconque des revendications précédentes pour guider de l'hydrogène liquide pressurisé à 100 bars ou plus dans le conduit.
